# EUROPÄISCHE PATENTSCHRIFT

(11) **EP 1 954 988 B1**
(45) Veröffentlichungstag und Bekanntmachung des Hinweises auf die Patenterteilung: **25.02.2015**
(21) Anmeldenummer: 06829205.1
(22) Anmeldetag: 30.11.2006
(51) Int. Cl.: F24F 11/00

(54) **LUFTDICHTEVERGLEICHSREGELUNG**
ATMOSPHERIC DENSITY REFERENCE CONTROL
REGULATION DE REFERENCE DE DENSITE ATMOSPHERIQUE

(30) Priorität: 01.12.2005 DE 102005057454
(43) Veröffentlichungstag der Anmeldung: 13.08.2008
(73) Patentinhaber: delta green box Patent GmbH & Co. KG, 10707 Berlin (DE)
(72) Erfinder: NERLING, Helmut, Moosstrasse 6 82279 Eching (DE)
(74) Vertreter: Zimmermann & Partner
(86) Internationale Anmeldenummer: PCT/EP2006/011507
(87) Internationale Veröffentlichungsnummer: WO 2007/062843

(56) Entgegenhaltungen:
- EP-A2- 0 415 747
- DE-A1- 4 226 995
- DE-A1- 10 033 209
- JP-A- 2004 293 846
- US-A- 5 259 553

## Beschreibung

### Gebiet der Erfindung

Die Erfindung bezieht sich auf ein Verfahren und eine Vorrichtung zur Regelung einer Lüftungsanlage oder Klimaanlage von Gebäuden. Solche Regelungen werden vorwiegend bei Gewerbeimmobilien eingesetzt und dienen zur Herstellung und Beibehaltung gewünschter Raumklimabedingungen.

### Stand der Technik

Bei herkömmlichen Lüftungsanlagen, die aus dem Stand der Technik bekannt sind, wird ständig eine konstante Luftmenge in die zu belüftenden Räume eingeblasen. Wahlweise sind maximal zwei Abstufungen für das Einblasen der Luft vorgesehen. Eine solche herkömmliche Belüftungsanlage ist schematisch in Fig: 1 dargestellt.

Die angesaugte Luft wird je nach Bedarf und Anforderung aufbereitet, gefiltert, beheizt, gekühlt und be- oder entfeuchtet und dann in den Raum eingeblasen. Als wesentliche Parameter für die Regelung der Lüftungsanlage dienen Temperaturmessungen und Temperaturvorgaben. Die Abluft wird durch ein zweites Gebläse abgesaugt. Typischerweise verschwindet bei herkömmlicher Raumbe- und entlüftung ein erheblicher Anteil der aufbereiteten Luft von dem Zuluftauslass direkt in der Abluftänsauwng, dieser Effekt wird Schlupf genannt und liegt üblicherweise in der Größenordnung von 20% bis 30%. Somit wird ein Teil der für die Aufbereitung aufgewendeten Energie nicht für die Raumklimatisierung benutzt, folglich steigt der Umluftanteil. Die zur Luftaufbereitung verwendete Energie wird nicht optimal eingesetzt.

Zusätzlich entstehen Zugprobleme, diese treten auf, wenn sich die Luft mit größeren Geschwindigkeiten im Raum bewegt.

Aus der DE 100 33 209 A1 ist ein Lüftungsverfahren bekannt, bei dem eine Temperatur der Außenluft und die Temperatur eines Raumes erfasst und aufgrund der Temperaturdifferenzen zwischen Außenluft und Raum der von den natürlichen Kräften erzeugte Druck berechnet wird, mit dem eine Luftströmung in/aus dem Raum erfolgt, ohne dass ein Ventilator benutzt wird. Dabei wird aus den gemessenen Temperaturen die Dichte der Raumluft und die Dichte der Außenluft berechnet.

Aus der DE 42 26 995 A1 ist ein Atmosphären-Steuersystem bekannt, mittels welchem sich die Innenumgebungsfaktoren einstellen lassen und sich unterschiedliche Atmosphärenarten in einem Raum bereitstellen lassen. Das System arbeitet auf der Basis von Werten, welche über die Außentemperatur, die Außenfeuchtigkeit erfasst werden oder auf der Basis von weiteren Sensoren und Werten, die über die Innentemperatur, die Feuchtigkeit, die Anzahl von Personen erfasst werden, und es erfolgt eine integrale Modulation der Umgebungsfaktoren, welche die Temperatur, die Feuchtigkeit, den Druck, den Luftaustausch, die Beleuchtung, den Geruch und die Windgeschwindigkeit umfassen, um Atmosphärenarten für das Arbeiten, Schlafen, die Freizeit, die Unterhaltung und das Üben bereitzustellen.

### Zusammenfassung der Erfindung

Daher ist es Aufgabe der vorliegenden Erfindung, eine Regelung für Lüftungsanlagen bereitzustellen, die die oben genannten Probleme beseitigt oder zumindest deutlich reduziert.

Diese Aufgabe wird gemäß dem Verfahren nach Patentanspruch 1 und der Vorrichtung nach Anspruch 13 gelöst. Vorteilhafte Ausführüngsformen sind in den abhängigen Patentansprüchen beschrieben.

Das erfindungsgemäße Verfahren zur Regelung einer Lüftungsanlage oder einer Klimaanlage verwendet als wesentlichen Parameter für die Regelung die Luftdichte. Die Luftdichte ist abhängig von der Temperatur, der Luftfeuchtigkeit und dem Luftdruck. Sind diese drei Größen bekannt, so lässt sich die Luftdichte daraus mit allgemein bekannten Formeln berechnen.

Bei Kenntnis der Luftdichte der einzubringenden Luft und der Luftdichte in den zu klimatisierenden Räumen kann eine Luftdichtedifferenzsteuerung vorgenommen werden. Diese Differenz wird möglichst gering gehalten. Bei gleichmäßiger Luftdichte werden Thermik und/oder Zugerscheinungen vermieden, wenn dort nicht isotherm Luft eingeblasen wird.

Die einzubringende Luft dient als Energieträger für die Klimatisierung des Raums. Bei Luftdichtedifferenzsteuerung verteilt sich die eingebrachte Luft effizient im Raum, hierdurch wird ihre Energie effizienter genutzt verglichen mit herkömmlichen Lüftungsanlagen. Daher ist die Erfindung geeignet, den Energiebedarf zu senken. Zudem braucht nur eine geringere Luftmenge zur Klimatisierung eingebracht werden.

Vorteilhafterweise wird die Luftdichte, d.h. die Temperatur, die Luftfeuchtigkeit und der Luftdruck, sowohl im Zuluftbereich wie auch im zu klimatisierenden Raum gemessen. Weiterhin kann die Luftdichte ebenfalls im Außenbereich gemessen werden, um Referenzwerte zu erhalten. So kann die Zuluft in Abhängigkeit von gewünschten Werten für die Raumtemperatur und Luftfeuchte in geeigneter Weise vorkonditioniert werden. Sie kann z.B. erhitzt bzw. gekühlt oder befeuchtet bzw. entfeuchtet werden. Die gemessenen Außenwerte werden bevorzugt als Referenzwerte verwendet, um in Abhängigkeit von ihnen das Klimatisierungsverfahren so zu regeln, dass es nicht zu Instabilitäten kommt. Die Gefahr von Instabilitäten der Regelung besteht vor allem, wenn ohne Referenz gearbeitet wird und nur Messungen im Raum und hinter den Luftkonditionierungseinheiten vorgenommen werden. Der Betrag der Luftdruckdifferenz zwischen Raum und Außenbereich sollte vorbestimmte Werte nicht überschreiten.

Zur Gewährleistung einer guten Raumluftqualität kann selbige in dem zu belüftenden Raum gemessen werden. Zur Bewertung kann wahlweise der Kohlendioxidgehalt gemessen werden oder eine Bewertung mit Hilfe eines Mischgassensors vorgenommen werden. Die Regelung der Abluftmenge hängt wesentlich von dem Ergebnis der gemessenen Luftqualität ab. Je schlechter die Luftqualität ist, desto mehr Luft wird aus dem betroffenen Raum abgesaugt und desto mehr Frischluft wird zugeführt. Auf einen Umluftbetrieb kann verzichtet werden, da im Wesentlichen nur auf Grund schlechter Luftqualität Luft abgesaugt wird. Diese Luft hat durch die Differenzdichteregelung ihre Klimatisierungsaufgabe zuvor erfüllt. Der Effekt des Schlupfs herkömmlicher Lüftungsanlagen wird vermieden.

Für eine optimierte Raumklimatisierung können die Zuluftmenge und die Abluftmenge unabhängig voneinander variabel geregelt werden. Hierdurch wird eine bessere Anpassung an die aktuellen Erfordernisse erzielt.

Gemäß der Erfindung kann die Luft mit einem Druck in den Raum eingebracht werden, der höher ist als der Druck im Raum, so dass sich die eingebrachte Luft durch im Wesentlichen ungerichtete Bewegungen im Raum verteilt, wodurch Zugerscheinungen vermieden werden. Dies geschieht durch vorherigen Angleich der Luftdichten.

Zur Sicherstellung der Stabilität der Regelung kann eine Luftdruckdifferenz zwischen Raum und Außenbereich ermittelt werden. Diese Differenz sollte einen gewissen Betrag nicht überschreiten, sie sollte nicht größer als 10 Pascal werden, bevorzugt sollte sie 6 Pascal nicht überschreiten. Durch die Luftdichtedifferenzregelung wird in den meisten Fällen ein Druckunterschied zwischen Raum und Außenbereich entstehen. Dies ist eine Folge der Minimierung der Luftdichtedifferenz.

Das erfindungsgemäße Verfahren kann auch vorteilhaft für die Belüftung von Schwimmbädern eingesetzt werden. Bei dieser Anwendung hat die geringe Luftaustauschmenge weitere Vorteile, so wird die Wasserverdunstung und die Kondenswasserbildung reduziert.

Die Erfindung sieht ebenfalls eine Vorrichtung zur Realisierung der Regelung vor. Vorteilhafterweise sind am Eingang des Zuluftbereichs und/oder am Ausgang des Abluftbereichs steuerbare Klappen vorgesehen, insbesondere automatisierte steuerbare Klappen. Mit Hilfe dieser Klappen kann z.B. bei ausgeschalteter Lüftungsanlage ein unerwünschtes Eindringen oder Entweichen von Luft verhindert werden.

Die erfindungsgemäße Vorrichtung kann weiterhin mit Kommunikationsmitteln ausgestattet sein. Über diese Kommunikationsmittel kann die Vorrichtung z.B. an ein Netzwerk oder direkt an einen Computer angeschlossen werden. So können selbst aus großer Entfernung Daten, die von der Vorrichtung erfasst und gespeichert wurden, abgerufen werden. Hierdurch kann der ordnungsgemäße Betrieb überwacht werden. Zudem ist diese Einrichtung für Wartungsarbeiten oder für eine fernkontrollierte Steuerung sehr hilfreich.

Gemäß einer weiteren vorteilhaften Ausführungsform der Erfindung ist die Vorrichtung als zusätzliches Modul konzipiert, die zu einer herkömmlichen Lüftungsanlage hinzugefügt werden kann. Dies ermöglicht die Nachrüstung bereits bestehender Systeme. Je nach vorgefundener Lage müssen Fühler oder andere Elemente im Gebäude nachgerüstet werden.

### Kurze Beschreibung der Zeichnungen

Die Erfindung wird nachstehen anhand von Zeichnungen genauer erläutert werden, aus denen weitere Vorteile deutlich werden.
- Fig. 1: ist eine schematische Darstellung, die eine Anlage gemäß dem Stand der Technik zeigt.
- Fig. 2: ist eine schematische Darstellung, die eine erfindungsgemäße Anlage zeigt.

### Detaillierte Beschreibung der Zeichnungen

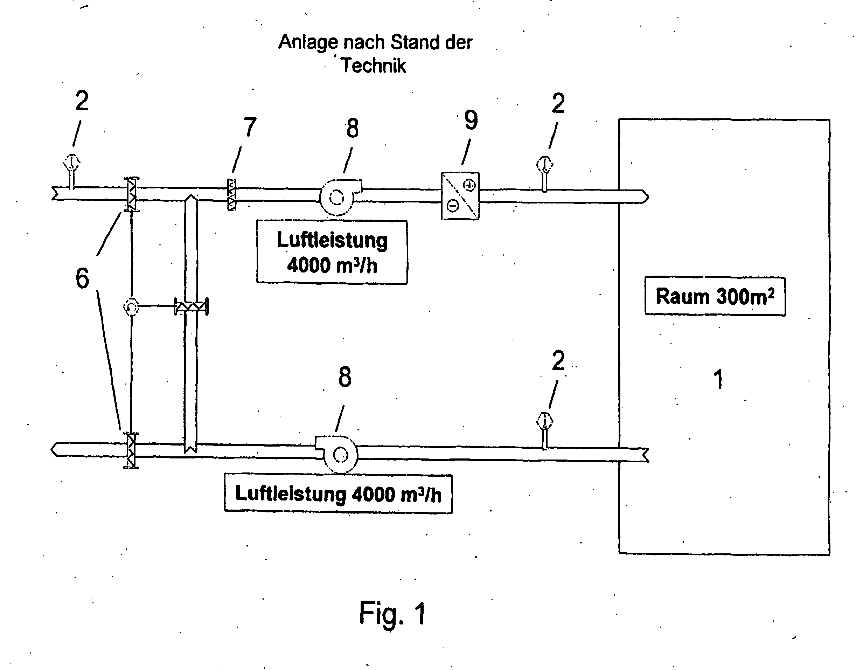

Figur 1 ist eine schematische Darstellung einer herkömmlichen Belüftungsanlage. Hier wird eine gewünschte Zieltemperatur für den Raum 1 gewählt. Die Temperaturfühler 2 messen die Temperatur an verschiedenen Stellen. In Abhängigkeit von der Temperatur der abgesaugten Luft wird die Zuluft in einem Luftkonditionierer 9 erhitzt oder gekühlt. Der Luftkonditionierer 9 dient ebenfalls zum Be- bzw. Entfeuchten der Luft. Die Zuluft wird von außen angesaugt und passiert auf ihrem Weg zum Zuluftgebläse 8 eine steuerbare Klappe 6 und einen Filter 7. Die Luft wird mit Hilfe eines zweiten Gebläses 8 aus dem Raum 1 abgesaugt. Die beiden Gebläse 8 weisen eine fixe Luftleistung von z.B. 4000 m³/h auf.

Zum Erreichen von gewünschten Klimabedingungen wird mit hohen Luftaustauschraten gearbeitet, dies resultiert in hohen Strömungsgeschwindigkeiten der Luft. Da auf Grund der hohen Luftströmgeschwindigkeit ein substantieller Anteil der eingeblasenen Luft gleich wieder abgesaugt wird, ist ein Umluftkreis vorgesehen, um die Energieeffizienz zu steigern. Abgesaugte Luft kann über eine weitere Klappe 6 nach außen abgegeben werden.

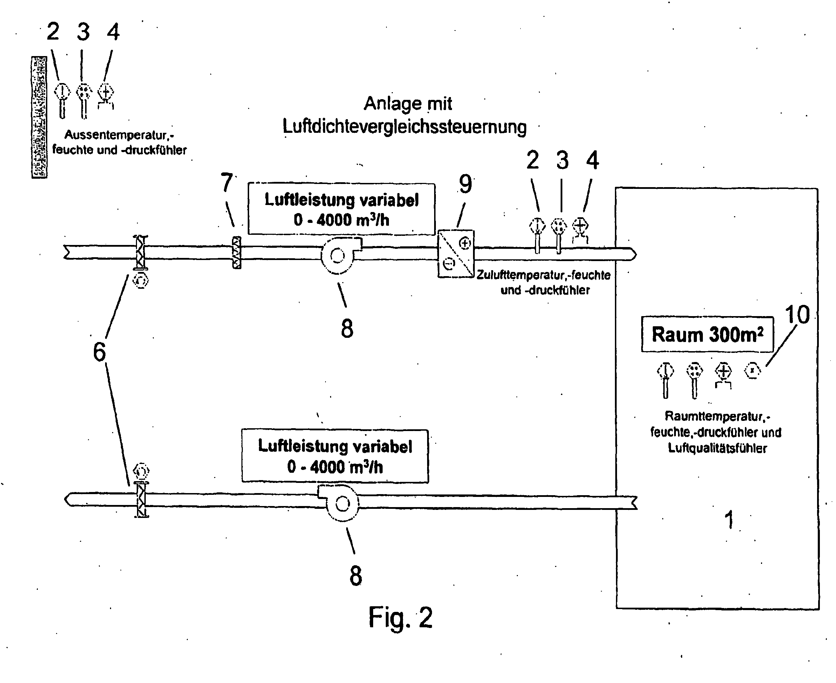

Figur 2 ist eine schematische Darstellung einer Anlage mit Luftdichtevergleichssteuerung. Vergleichbare Objekte sind mit den gleichen Bezugszeichen versehen, die bereits in Fig. 1 verwendet wurden. Zusätzlich zu den Temperaturfühlern 2 sind hier Feuchte- 3 und Druckfühler 4 vorgesehen. Jeweils einer dieser Fühler ist im Außenbereich, im Zuluftbereich und im Raum 1 vorgesehen. Zudem ist im Raum 1 noch ein Luftqualitätsfühler 10 vorgesehen. Weiterhin wird mit Gebläsen 8 gearbeitet, die im Gegensatz zum Stand der Technik stufenlos einstellbar sind. Alternativ zu der stufenlosen Einstellbarkeit kann auch eine feinstufige Einstellbarkeit verwendet werden.

Die Luftdichte kann für verschiedene Stellen aus den Messungen der Fühler 2, 3, 4 ermittelt werden. Die Luftdichtedifferenz zwischen der einzubringenden Luft und der Raumluft wird minimiert. Dies geschieht mit Hilfe des Luftkonditionierers 9 und des Zuluftgebläses 8, das stufenlos einstellbar, startend bei einer ZuLuftmenge von z.B. 0 m³/h oder 400 m³/h. Auf diese Weise kann Thermik und eine möglichst optimale Energieaufnahme der eingebrachten Heiz- und Kühlenergie sichergestellt werden. Folglich werden geringere Luftaustauschmengen zur Klimatisierung benötigt. Der Luftkonditionierer 9 wird zum Kühlen des Raums 1 nur eingesetzt, wenn eine adiabatische Kühlung nicht mehr ausreicht.

Der ermittelte Außenluftdruck dient als Referenzwert. Die Differenz zum Raumdruck sollte einen gewissen Betrag nicht überschreiten.

Die Luftabsaugung wird im Wesentlichen von der Luftqualität bestimmt, die durch den Luftqualitätsfühler 10 gemessen wird. Je schlechter die Luftqualität ist, desto mehr Luft wird aus dem betroffenen Raum abgesaugt.

Beispielhaft wird das erfindungsgemäße Verfahren beim Heizen bzw. Kühlen in den folgenden Schritten ausgeführt. Zuerst findet ein Temperaturvergleich zwischen der gewünschten Raumtemperatur und der tatsächlichen Raumtemperatur statt, dies geschieht vorzugsweise mittels Differenzbildung. Wenn der Temperaturvergleich eine Abweichung zwischen gewünschter Raumtemperatur und tatsächlicher Raumtemperatur ergibt, die oberhalb eines vorbestimmten Grenzwerts ist, wird die Zulufttemperatur auf eine hohe bzw. niedrige Temperatur geregelt, je nachdem, ob die gewünschte Raumtemperatur überschritten oder unterschritten ist. Bevorzugt wird eine maximale Heiz- bzw. Kühltemperatur eingestellt. Die Luftdichtedifferenzregelung ermöglicht es, im Vergleich mit herkömmlichen Lüftungsanlagen, mit größeren Temperaturdifferenzen zwischen einzubringender Luft und Raumluft zu arbeiten, weil durch die angepasste Luftdichte der einzubringenden Luft Zugerscheinungen vermieden werden. Folglich kann die Luftmenge, die benötigt wird, um einen bestimmten Heiz- bzw. Kühleffekt zu erzielen, reduziert werden.

In Abhängigkeit von dem Ergebnis des Temperaturvergleichs wird die Zuluftmenge über das Gebläse 8 in einer vorbestimmten Art und Weise erhöht. Hierzu kann beispielsweise eine Rampe, die in Abhängigkeit von dem Ergebnis des Temperaturvergleichs ausgewählt wird, verwendet werden, um die Zuluftmenge kontinuierlich oder schrittweise zu erhöhen.

Während der gesamten Regelung wird durch wiederholtes, insbesondere kontinuierliches, Ermitteln der Raumluftdichte und der Zuluftdichte die Zuluftdichte in Abhängigkeit von den ermittelten Luftdichten nachgeregelt. Die Zuluftdichte wird stets an die Raumluftdichte angeglichen.

Wenn sich die Raumtemperatur in die gewünschte Richtung bewegt, wird die Zuluftmenge reduziert. Die Reduzierung hängt von der verbleibenden Temperaturdifferenz und/oder der Geschwindigkeit der Temperaturänderung im Raum ab. Die Zuluftmenge wird im Verlaufe der Temperaturangleichung stetig reduziert, bis die Mindestdrehzahl des Zuluftgebläses 8 erreicht ist. Die Mindestdrehzahl variiert naturgemäß für unterschiedliche Zuluftgebläsetypen.

Bevorzugt wird erst jetzt eine Zulufttemperaturänderung vorgenommen. Die Zulufttemperatur wird von einer hohen bzw. niedrigen Temperatur, die hier üblicherweise noch die maximale Heiz- bzw. Kühltemperatur ist, auf eine Temperatur, die näher an der gewünschten Raumtemperatur ist, geregelt. Dies geschieht insbesondere, wenn eine Abweichung zwischen gewünschter Raumtemperatur und tatsächlicher Raumtemperatur einen vorbestimmten Grenzwert unterschreitet:

Durch die lange Verwendung der sehr hohen bzw. sehr niedrigen Zulufttemperatur kann die Zuluftmenge deutlich reduziert werden, was zu den bereits beschriebenen Vorteilen führt.

## Patentansprüche

1. Verfahren zur Regelung einer Lüftungsanlage, insbesondere einer Klimaanlage,
wobei eine Luftdichte in einem zu belüftenden Raum ermittelt wird, **dadurch gekennzeichnet, dass** weiter
eine Luftdichte in einem Zuluftbereich ermittelt wird, und
wobei eine Luftdichtedifferenz zwischen dem zu belüftenden Raum und dem Zuluftbereich ermittelt wird,
wobei die Luftdichtedifferenz als wesentlicher Parameter für die Regelung verwendet wird, so dass die Luftdichtedifferenz einen vorbestimmten Betrag nicht überschreitet.

2. Verfahren nach Anspruch 1, wobei die Luftdichte ermittelt wird aus Messungen von Temperatur, Luftfeuchtigkeit und Luftdruck.

3. Verfahren nach einem der vorhergehenden Ansprüche, wobei die Luftdichte weiterhin in einem Außenbereich ermittelt wird.

4. Verfahren nach einem der vorhergehenden Ansprüche, wobei im Zuluftbereich die Luft beheizt bzw. gekühlt und/oder befeuchtet bzw. entfeuchtet wird.

5. Verfahren nach einem der vorhergehenden Ansprüche, wobei eine Luftqualität in dem zu belüftenden Raum erfasst wird, insbesondere über ihren Kohlendioxidgehalt oder über einen Mischgassensor, und
wobei die Regelung der Abluftmenge wesentlich von dem Ergebnis der gemessenen Luftqualität abhängt.

6. Verfahren nach einem der vorhergehenden Ansprüche, wobei die Zuluftmenge und/oder die Abluftmenge variabel geregelt werden können.

7. Verfahren nach einem der vorhergehenden Ansprüche, wobei die Luft mit einem Druck in den Raum eingebracht wird, der höher ist als der Druck im Raum, so dass sich die eingebrachte Luft durch im Wesentlichen ungerichtete Bewegungen im Raum verteilt, wodurch Zugerscheinungen vermieden werden.

8. Verfahren nach einem der vorhergehenden Ansprüche, wobei die Luftdichtedifferenz durch die Regelung minimiert wird.

9. Verfahren nach einem der vorhergehenden Ansprüche, wobei das Verfahren zum Belüften eines Schwimmbads eingesetzt wird.

10. Verfahren nach einem oder mehreren der vorhergehenden Ansprüche, wobei das Verfahren in den folgenden Schritten ausgeführt wird:
a) Temperaturvergleich der gewünschten Raumtemperatur mit der tatsächlichen Raumtemperatur,
b) wenn der Temperaturvergleich eine Abweichung zwischen gewünschter Raumtemperatur und tatsächlicher Raumtemperatur ergibt, die oberhalb eines vorbestimmten Grenzwerts ist, wird die Zulufttemperatur auf eine erhöhte bzw. erniedrigte Temperatur geregelt, insbesondere auf eine maximale Heiz- bzw. Kühltemperatur, und
c) Erhöhen der Zuluftmenge über ein Zuluftgebläse (8) in Abhängigkeit von dem Ergebnis des Temperaturvergleichs.

11. Verfahren nach Anspruch 10, weiter umfassend die Schritte:
d) wiederholtes, insbesondere kontinuierliches, Ermitteln der Raumluftdichte und der Zuluftdichte und Nachregeln der Zuluftdichte in Abhängigkeit von den ermittelten Luftdichten, und
e) Reduzieren der Zuluftmenge, sobald sich die Raumtemperatur in die gewünschte Richtung bewegt.

12. Verfahren nach Anspruch 10 oder 11, weiter umfassend den Schritt:
f) Ändern der Zulufttemperatur, die Zulufttemperatur wird von einer erhöhten bzw. erniedrigten Temperatur auf eine Temperatur, die näher an der gewünschten Raumlufttemperatur ist, geregelt, insbesondere wenn eine Abweichung zwischen gewünschter Raumtemperatur und tatsächlicher Raumtemperatur einen vorbestimmten Grenzwert unterschreitet.

13. Vorrichtung zur Regelung einer Lüftungsanlage, insbesondere einer Klimaanlage, die zusätzlich zu Temperaturfühlern (2) Luftfeuchtigkeitsfühler (3) und Luftdruckfühler (4) zum Ermitteln einer Luftdichte in einem Zuluftbereich und einer Luftdichte in einem zu belüftenden Raum aufweist, wobei die Vorrichtung ein Verfahren gemäß einem der Ansprüche 1 bis 9 realisiert.

14. Vorrichtung nach Anspruch 13, wobei an einem Eingang des Zuluftbereichs und/oder an einem Ausgang des Abluftbereichs steuerbare Klappen (6) vorgesehen sind, insbesondere automatisierte steuerbare Klappen (6).

15. Vorrichtung nach Anspruch 13 oder 14, wobei die Vorrichtung Kommunikationsmittel umfasst, insbesondere um Betriebsdaten zu einem Computer zu übertragen und/oder um von diesem Befehle zu empfangen.

16. Vorrichtung nach einem der Ansprüche 13 bis 15, wobei die Vorrichtung als zusätzliches Modul zu einer herkömmlichen Lüftungsanlage hinzugefügt werden kann.

17. Vorrichtung nach einem der Ansprüche 13 bis 16, weiterhin umfassend einen Luftqualitätsfühler (10).

## Claims

1. Method of regulating a ventilation system, more particularly an air-conditioning system,
wherein an air density in a room to be ventilated is determined,
**characterised in that** in addition
an air density in an supply air area is determined, and
wherein an air density difference between the room to be ventilated and
the supply air area is determined, and
wherein the air density difference is used as an essential parameter for regulation,
so that the air density difference does not exceed a predetermined figure.

2. Method according to claim 1, wherein the air density is determined from measurements of temperature, relative humidity and air pressure.

3. Method according to one of the preceding claims, wherein the air density is also determined in an external area.

4. Method according to any one of the preceding claims, wherein in the supply air area the air is heated/cooled and/or humidified/dehumidified.

5. Method according to any one of the preceding claims, wherein an air quality is recorded in the room to be ventilated, more particularly via its carbon dioxide content or by way of a mixed gas sensor, and
wherein the regulation of the outgoing air quantity essentially depends on the result of the measured air quality.

6. Method according to any one of the preceding claims, wherein the supply air quantity and/or the outgoing air quantity can be regulated in a variable manner.

7. Method according to any one of the preceding claims, wherein the air is supplied to the room at a pressure which is higher than the pressure in the room, so that the supplied air is distributed through essentially non-aligned movements, as a result of which draught manifestations are avoided.

8. Method according to any one of the preceding claims, wherein the air density difference is minimised by the regulation.

9. Method according to any one of the preceding claims wherein the method is used for the of ventilation of a swimming pool.

10. Method according to one or more of the preceding claims, wherein the method is carried out in the following stages:
a) temperature comparison of the desired room temperature with the actual room temperature,
b) if the temperature comparison shows a difference between the desired room temperature and the actual room temperature which is above a predetermined limit value, the supply air temperature is regulated to an increased or reduced temperature, more particularly to a maximum heating or cooling temperature, and
c) increasing the supply air quantity via a supply air blower (8) as a function of the result of the temperature comparison.

11. Method according to claim 10, additionally including the stages:
d) repeated, more particularly continuous, determination of the room air density and the supply air density and adjusting the supply air density as a function of the determined air densities, and
e) reducing the supply air quantity as soon as the room temperature moves in the desired direction.

12. Method according to claim 10 or 11, additionally comprising the stage:
f) adjusting the supply air temperature, the supply air temperature is regulated from an increased/reduced temperature to a temperature which is closer to the desired room air temperature, more particularly if a difference between the desired room temperature and the actual room temperature is below a predetermined limit value.

13. Device for regulating a ventilation system, more particularly an air-conditioning system, which in addition to temperature sensors (2), has relative humidity sensors (3) and air pressure sensors (4) for determining an air density in a supply air area and an air density in a room to be ventilated, wherein the device implements a method in accordance with any one of claims 1 to 9.

14. Device according to claim 13, wherein at an inlet of the supply air area and/or an outlet of the outgoing air area controllable valves (6) are provided, more particularly automatically controllable valves (6).

15. Device according to claim 13 or 14, wherein the device comprises communication means, more particularly for sending operating data to a computer and/or for receiving commands from the latter.

16. Device according to any one of claims 13 to 15, wherein the device can be added to a conventional ventilation system as an additional module.

17. Device according to any one of claims 13 to 16, also comprising an air quality sensor (10).

## Revendications

1. Procédé destiné à la régulation d'un système de ventilation, notamment d'un système de climatisation,
lors duquel une densité de l'air est déterminée dans un espace qui doit être ventilé,
**caractérisé en ce que**, par ailleurs
une densité de l'air est déterminée dans une zone d'alimentation d'air frais,
une différence de densité d'air entre l'espace qui doit être ventilé et la zone d'alimentation d'air est déterminée,
la différence de densité d'air est utilisée en tant que paramètre essentiel pour la régulation, de sorte que la différence de densité d'air ne dépasse pas une valeur prédéfinie.

2. Procédé selon la revendication 1, lors duquel la densité de l'air est déterminée à partir de mesures de la température, de l'humidité et de la pression atmosphérique.

3. Procédé selon l'une quelconque des revendications précédentes, lors duquel la densité de l'air est déterminée de surcroît dans une zone extérieure.

4. Procédé selon l'une quelconque des revendications précédentes, lors duquel l'air est chauffé ou refroidi et/ou humidifié ou déshumidifié dans la zone d'alimentation d'air frais.

5. Procédé selon l'une quelconque des revendications précédentes, lors duquel une qualité de l'air est détectée dans l'espace qui doit être ventilé, notamment par l'intermédiaire de sa teneur en dioxyde de carbone ou par l'intermédiaire d'un capteur de mélange de gaz et
lors duquel la régulation de la quantité d'air évacuée dépend essentiellement du résultat de la qualité de l'air mesurée.

6. Procédé selon l'une quelconque des revendications précédentes, lors duquel la quantité d'air frais alimentée et/ou la quantité d'air évacuée sont à réglage variable.

7. Procédé selon l'une quelconque des revendications précédentes, lors duquel l'air est introduit dans l'espace sous une pression qui est supérieure à la pression dans l'espace, de sorte que l'air introduit se distribue dans l'espace par des mouvements sensiblement non orientés, ce qui permet d'éviter les phénomènes de courants d'air.

8. Procédé selon l'une quelconque des revendications précédentes, lors duquel la différence de la densité d'air est minimisée par la régulation.

9. Procédé selon l'une quelconque des revendications précédentes, lors duquel le procédé destiné à la ventilation est utilisé dans une piscine.

10. Procédé selon l'une quelconque ou plusieurs des revendications précédentes, lors duquel le procédé est réalisé par les étapes suivants :
a) une comparaison de températures entre la température ambiante souhaitée et la température ambiante effective,
b) si de la comparaison de températures, il résulte un écart entre la température ambiante souhaitée et la température ambiante effective qui est supérieure à une valeur limite prédéfinie, la température de l'air frais alimenté est réglée sur une température plus élevée ou plus basse, notamment à une température maximale de chauffage ou de refroidissement
et
c) une augmentation de la quantité d'air frais alimentée via une soufflante (8) d'air frais en fonction du résultat de la comparaison des températures.

11. Procédé selon la revendication 10, comprenant de surcroît les étapes suivantes :
d) une détermination répétée, notamment continue de la densité de l'air ambiant et de la densité de l'air frais et un ajustement de la densité de l'air frais en fonction de la densité d'air déterminée et
e) une réduction de la quantité d'air frais alimentée, dès que la température ambiante varie dans la direction souhaitée.

12. Procédé selon la revendication 10 ou la revendication 11, comprenant de surcroît l'étape :
f) une modification de la température d'air frais alimenté, la température d'air frais alimenté est réglée d'une température élevée ou basse à une température plus proche de la température de l'air ambiant souhaitée, notamment si un écart entre la température ambiante souhaitée et la température ambiante effective n'atteint pas une valeur limite prédéfinie.

13. Dispositif destiné à la régulation d'un système de ventilation, notamment d'un système de climatisation, qui en supplément de sondes thermiques (2) comporte des sondes d'humidité de l'air (3) et des sondes de pression d'air (4) pour déterminer une densité de l'air dans une zone d'alimentation d'air frais et une densité de l'air dans un espace qui doit être ventilé, le dispositif réalisant un procédé selon l'une quelconque des revendications 1 à 9.

14. Dispositif selon la revendication 13, sur lequel sur une entrée de la zone d'alimentation d'air frais et/ou sur une sortie de la zone d'évacuation d'air sont prévus des clapets (6) susceptibles d'être commandés, notamment des clapets (6) à commande automatique.

15. Dispositif selon la revendication 13 ou la revendication 14, le dispositif comprenant des moyens de communication, notamment pour transférer des données de service vers un ordinateur et/ou pour réceptionner des instructions de la part de celui-ci.

16. Dispositif selon l'une quelconque des revendications 13 à 15, le dispositif pouvant être rajouté en tant que module supplémentaire à un système de ventilation conventionnel.

17. Dispositif selon l'une quelconque des revendications 13 à 16, comprenant de surcroît une sonde (10) de la qualité de l'air.
